(19) Europäisches Patentamt
European Patent Office
Office européen des brevets

(11) **EP 2 544 935 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
**B60W 40/10** $^{(2012.01)}$ **B60W 50/02** $^{(2012.01)}$

(21) Anmeldenummer: **11703846.3**

(86) Internationale Anmeldenummer:
**PCT/EP2011/051229**

(22) Anmeldetag: **28.01.2011**

(87) Internationale Veröffentlichungsnummer:
**WO 2011/110382 (15.09.2011 Gazette 2011/37)**

(54) **VERFAHREN UND VORRICHTUNG ZUR ERKENNUNG EINER ABWEICHUNG EINES DREHRATENSIGNALS EINES DREHRATENSENSORS**

METHOD AND DEVICE FOR DETECTING A DEVIATION OF A ROTATION RATE SIGNAL OF A ROTATION RATE SENSOR

PROCÉDÉ ET DISPOSITIF DE DÉTECTION D'UN ÉCART D'UN SIGNAL DE VITESSE DE ROTATION D'UN CAPTEUR DE VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2010 DE 102010002680**

(43) Veröffentlichungstag der Anmeldung:
**16.01.2013 Patentblatt 2013/03**

(73) Patentinhaber: **Robert Bosch GmbH**
**70442 Stuttgart (DE)**

(72) Erfinder:
• **SCHUETZE, Norman**
**71254 Ditzingen (DE)**
• **BENTELE-CALVOER, Stephan**
**71229 Leonberg-Warmbronn (DE)**

(56) Entgegenhaltungen:
**DE-A1- 10 348 165   DE-A1- 19 964 020**
**DE-A1-102006 049 118   DE-A1-102007 004 606**
**US-A1- 2003 163 226**

## Beschreibung

Stand der Technik

Die vorliegende Erfindung bezieht sich auf ein Verfahren zur Erkennung einer Abweichung eines Drehratensignals eines Drehratensensors, auf ein entsprechendes Steuergerät sowie auf ein entsprechendes Computerprogrammprodukt.

Für die aktive und passive Sicherheit eingesetzten Inertialsensoren bestehen aus einem einkanaligen Drehratensensor und einem zweikanaligen Beschleunigungssensor in einem Gehäuse. Es werden sehr hohe Anforderungen an die Offsetstabilität der Inertialsensoren gestellt.

Die DE 10 2007 004 606 A1 befasst sich mit einem Verfahren zum Ermitteln eines Signalversatzes eines Gierratensensor. Zum Ermitteln des Signalversatzes wird ein Signal des Gierratensensors erfasst und integriert. Der Signalversatz des Gierratensensors wird ermittelt, falls der Betrag der Querbeschleunigung kleiner als ein Schwellenwert ist.

Aus der DE 103 48 165 A ist eine Vorrichtung zur Ermittlung einer Drehrate um die Hochachse eines Fahrzeuges bekannt, umfassend einen Drehratensensor, welcher ein von der Drehrate um die Hochachse abhängiges Signal abgibt, und ein Signalauswertemittel, welches aus dem vom Drehratensensor zugeführten Signal die Drehrate ermittelt. Dabei ist ein Strahlsensor zur Erfassung eines Winkels eines im Vorausbereich des Fahrzeuges befindlichen Vorausfahrzeuges relativ zum Fahrzeug vorgesehen, wobei die Daten des Strahlsensors zum Erfassen des Winkels dem Signalauswertemittel zugeführt und bei der Kompensation des Offsetfehlers des Drehratensensors berücksichtigt werden.

Aus der DE 10 2007 004606 A1 ist bekannt, dass zum Ermitteln eines Signalversatzes eines Rollratensensors eines Fahrzeugs ein Signal des Rollratensensors erfasst wird. Darüber hinaus wird eine Querbeschleunigung des Fahrzeugs und eine zeitliche Ableitung der Querbeschleunigung wird ermittelt. Daraufhin wird überprüft, ob ein Betrag der zeitlichen Ableitung der Querbeschleunigung kleiner ist als ein vorgegebener erster Schwellwert. Abhängig vom Signal des Rollratensensors wird der Signalversatz des Rollratensensors ermittelt, falls der Betrag der zeitlichen Ableitung der Querbeschleunigung kleiner als der vorgegebene erste Schwellenwert ist.

Aus der DE 10 2006 049118 A1 ist bekannt, dass zum Ermitteln eines Signalversatzes eines Nickratensensors eines Fahrzeugs ein Signal des Nickratensensors erfasst wird. Darüber hinaus wird eine Längsbeschleunigung des Fahrzeugs ermittelt. Des Weiteren wird eine zeitliche Ableitung der Längsbeschleunigung ermittelt. Daraufhin wird überprüft, ob ein Betrag der zeitlichen Ableitung der Längsbeschleunigung kleiner ist als ein erster vorgegebener Schwellenwert. Abhängig vom Signal des Nickratensensors wird der Signalversatz des Nickratensensors ermittelt, falls der Betrag der zeitlichen Ableitung der Längsbeschleunigung kleiner als der erste vorgegebene Schwellenwert ist.

Offenbarung der Erfindung

Vor diesem Hintergrund wird mit der vorliegenden Erfindung ein Verfahren zur Erkennung einer Abweichung eines Drehratensignals eines Drehratensensors, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass ein absoluter Drehratenoffsetfehler, hervorgerufen durch unzulässige Driften oder Fehler im Sensor, in Ruhelage selbstständig von dem Sensor ermittel werden kann. Es wird kein zusätzlicher Drehratensensor für die Überwachung benötigt. Dabei interessiert nur der Fehler, der über einen spezifizierten, bekannten Fehler hinaus geht. Überschreitungen können so dem System angezeigt bzw. als absolute Größe zur Verfügung gestellt werden. Damit kann eine auf einem Signal des Sensors basierende relevante Funktion auf den Fehler reagieren, indem beispielsweise der Sicherheitsbereich zum Auslösen der Funktion vergrößert wird. Im "Normalbetrieb" muss nur mit dem reinen spezifizierten, also bekannten Fehler sicherer Betrieb gewährleistet werden. Die Güte oder Performance der Funktion kann also so hoch wie möglich gewählt werden, da über den spezifizierten Bereich hinaus unbekannte Fehler im Offset erkannt werden.

Mittels des erfindungsgemäßen Verfahrens wird eine selbstständige Erkennung von Offsetsprüngen und Driften des Drehratensignals, beispielsweise in einem Inertialsensor mit einem Drehratensensor und einem Beschleunigungssensor ermöglicht. Für das Bestimmen des tatsächlichen Ruheoffsets des Sensors muss sichergestellt sein, dass keine externen physikalischen Kräfte am Fahrzeug eine tatsächliche Drehrate im Sensor erzeugen. Diese tatsächlich erzeugte wahre Drehrate könnte sonst als Fehldrehrate aus der Ablage zum erlaubten Ruhewert interpretiert werden. Daher werden die ebenfalls im Inertialsensor vorhandenen Signale der hochauflösenden Beschleunigungssensoren erfindungsgemäß genutzt. Anstelle von einem Inertialsensor können die Signale auch von anderen geeigneten Sensoren bereitgestellt werden.

Die Anforderungen, die an die Offsetstabilität von Inertialsensoren gestellt werden, umfassen beispielsweise, dass das Drehratensignal ohne Einfluss externer physikalischer Kräfte, also in Ruhelage, nur ein Ausgangssignal von 0°/s am Sensorausgang bereitstellen darf. Da jedes Messsystem Fehler aufweist, ist dieses Signal mit einer Toleranz spezifiziert, die den gesamten Betriebsbereich sowie die Lebensdauer abdeckt. Heutige Kundenanforderungen erlauben dem Drehratensignal eine maximale Abweichung vom tatsächlich gemessenen Messwert von ±3°/s. Auf das obige Beispiel der Ruhelage bezogen, darf das am Sensorausgang bereitgestellte Drehratensignal also einen Wert zwischen -3°/s und +3°/s haben, obwohl die tatsächliche Drehrate in Ruhe 0°/s beträgt.

In Applikationen wie ESP, aktive Lenkung oder auch Airbag ist der Offsetfehler der Inertialsensoren eine essentielle Größe, die die Güte der Funktion bestimmt. Die Fahrzeugfunktion muss daher robust genug sein, Offsetfehler, also Abweichungen vom tatsächlich anliegenden Signal, zu kompensieren. Dabei muss berücksichtigt werden, dass nicht allein der erlaubte Offsetfehler von hier ±3°/s, sondern vielmehr auch größere Abweichungen des Offset im Betrieb aufgrund unzulässiger Driften, z.B. durch ein Verlassen des spezifizierten Betriebsbereiches oder hervorgerufen durch Fehler, berücksichtigt werden. Diese Kompensation ist immer ein Kompromiss zwischen Güte und Robustheit. Das heißt, der bekannte systematische Fehler muss von der Funktion durch Bereitstellen eines Sicherheitsabstandes zu dem Funktionseingreifpunkt, also der Aktivierung, kompensiert werden oder bedingt eine ungenauere Antwort des Systems auf das Messsignal, wodurch sich ein Verlust an Güte ergibt.

Da es auch Funktonen im Kraftfahrzeug gibt, die eine sehr hohe Güte der Messsignale benötigen, z. B. die aktive Lenkung, ist eine Ungenauigkeit in der Antwort der Funktion nicht mehr vertretbar. Erfindungsgemäß ist es damit nicht mehr erforderlich, dort nötige Sensoren mindestens doppelt, also redundant zu verbauen, um durch Vorliegen mehrerer gleicher Messsignale die Güte dieser zu bestimmen, indem sie gegenseitig verglichen werden. Durch einen Verzicht auf die mehrfache Verwendung von gleichen Sensoren in einem Steuergerät kann ein Anstieg der Entwicklungs- und Produktionskosten vermieden werden.

Die vorliegende Erfindung schafft ein Verfahren zur Erkennung einer Abweichung eines Drehratensignals eines Sensors eines Fahrzeugs, das die folgenden Schritte umfasst: Empfangen einer Information über eine Linearbeschleunigung des Fahrzeugs über eine erste Schnittstelle; Empfangen des Drehratensignals über eine zweite Schnittstelle, wobei das Drehratensignal eine Drehgeschwindigkeit des Fahrzeugs repräsentiert; und Analysieren des Drehratensignals, wenn die Linearbeschleunigung kleiner als ein erster Schwellwert ist, um die Abweichung des Drehratensignals zu erkennen.

Bei dem Fahrzeug kann es sich um ein Kraftfahrzeug handeln. Die Information über die Linearbeschleunigung und das Drehratensignal können von einem oder mehreren Sensoren, beispielsweise von Beschleunigungssensoren oder von einem Inertialsensor, bereitgestellt werden. Sind der oder die Sensoren in dem Fahrzeug angeordnet, so können die Linearbeschleunigung und die Drehrate des Fahrzeugs ermittelt werden. Die Linearbeschleunigung kann eine Querbeschleunigung oder eine Längsbeschleunigung des Fahrzeugs darstellen. Die Drehrate kann eine Drehgeschwindigkeit des Fahrzeugs, beispielsweise um eine Fahrzeughochachse, Fahrzeuglängsachse oder Fahrzeugquerachse, charakterisieren. Die Abweichung des Drehratensignals kann einen Messfehler des Drehratensignals repräsentieren, also einen Unterschied zwischen einem von dem Drehratensignal angezeigten Drehratenwert und einem tatsächlich vorliegenden Drehratenwert. Die Abweichung kann aus einem Offsetfehler des Sensors resultieren, der beispielsweise durch unzulässige Driften oder durch Sensorfehler hervorgerufen werden kann. Insbesondere kann eine Abweichung erkannt werden, die eine zulässige, bekannte oder tolerierbare Abweichung des Drehratensignals überschreitet. Je nachdem, ob das Verfahren durch einen Sensor oder durch eine Auswertevorrichtung umgesetzt wird, kann es sich bei der ersten und der zweiten Schnittstelle um interne Sensorschnittstellen oder um Schnittstellen zu einem oder mehreren Sensoren handeln. Die Information über die Linearbeschleunigung kann zeitlich fortlaufend der Linearbeschleunigung entsprechende Messwerte umfassen. Somit kann die Information über eine Linearbeschleunigung einen zeitlichen Verlauf der Linearbeschleunigung bereitstellen. Entsprechend dazu kann das Drehratensignal zeitlich fortlaufend der Drehrate entsprechende Messwerte umfassen. Somit kann das Drehratensignal einen zeitlichen Verlauf der Drehrate bereitstellen. Das Analysieren des Drehratensignals kann erfolgen, wenn die Linearbeschleunigung betragsmäßig kleiner als der erste Schwellwert ist. Die Information über die Linearbeschleunigung kann einen Ruhefehler aufweisen. Der Ruhefehler kann zu einem angezeigten Wert für eine Linearbeschleunigung führen, obwohl sich der Sensor in Ruhe befindet, als tatsächlich keine Linearbeschleunigung vorliegt. Der erste Schwellwert kann eine erlaubte Toleranzgrenze für den Ruhefehler definieren. Das Analysieren des Drehratensignals kann ein Auswerten aufeinanderfolgender Werte des Drehratensignals umfassen. Dabei können die aufeinanderfolgenden Werte des Drehratensignals zusammengefasst und anschließend mit einem geeigneten Schwellwert verglichen werden. Je nach Ausführungsform kann ein Erreichen, Überschreiten oder Unterschreiten des Schwellwertes eine Abweichung des Drehratensignals anzeigen. Wird die Abweichung des Drehratensignals erkannt, so kann eine entsprechende Information bereitgestellt werden. Die Information kann einen Hinweis darauf enthalten, dass eine Abweichung vorliegt. Zusätzlich kann die Information eine Größe der Abweichung anzeigen. Die Größe der Abweichung kann einen aktuellen Sensorfehler charakterisieren, der bei einer Weiterverarbeitung der Sensordaten berücksichtigt werden kann. Alternativ kann eine Weiterverarbeitung der Sensordaten verhindert werden, wenn die Erkannte Abweichung zu groß ist.

Das erfindungsgemäße Verfahren kann einen Schritt des Vergleichens der Information über die Linearbeschleunigung mit dem ersten Schwellwert umfassen. Mittels des Vergleichens kann bestimmt werden, ob die Linearbeschleunigung kleiner als der erste Schwellwert ist. Dabei kann ein Betrag der Linearbeschleunigung mit dem ersten Schwellwert verglichen werden. Alternativ können für unterschiedliche Vorzeichen der Linearbeschleunigung unterschiedliche erste Schwellwerte vorgesehen sein, die sich betragsmäßig unterscheiden oder nicht unterscheiden können. Auch kann ein aufbereiteter Wert der Linearbeschleunigung mit dem ersten Schwellwert verglichen werden. Eine entsprechende Aufbereitung kann eine Verstärkung oder Filterung der gemessenen Linearbeschleunigung umfassen. Dabei kann aus dem aufbereiteten Wert nach wie vor auf einen absoluten Wert der Linearbeschleunigung geschlossen werden und nicht nur auf eine Veränderung der Linearbeschleunigung, wie es beispielsweise bei einer Ableitung eines zeitlichen Verlaufs der Linearbeschleunigung der Fall wäre. Ergibt das Vergleichsergebnis, das die Linearbeschleunigung kleiner als der erste Schwellwert ist, so kann davon ausgegangen werden, dass entweder keine oder nur eine vernachlässigbar kleine Linearbeschleunigung und somit auch keine oder nur eine vernachlässigbar kleine Drehrate vorliegt. In diesem Fall kann das Analysieren des Drehratensignals begonnen oder weitergeführt werden. Für den Fall, dass aufgrund des Vergleichs festgestellt wird, dass eine nicht vernachlässigbare Linearbeschleunigung vorliegt, so kann das Analysieren des Drehratensignals beendet oder erst gar nicht begonnen werden.

Der Schritt des Analysierens kann ein Aufsummieren des Drehratensignals über eine Zeitspanne umfassen. Durch das Aufsummieren kann ein Drehratensummensignal erhalten werden. Die Abweichung des Drehratensignals kann durch ein Vergleichen des Drehratensummensignals mit einem zweiten Schwellwert erkannt werden. Beim Aufsummieren können zeitlich aufeinanderfolgende vorzeichenbehaftete diskrete Werte der Drehrate aufaddiert werden. Auch kann beim Aufsummieren ein Integrieren des Drehratensignals über die Zeit durchgeführt werden. Das Drehratensummensignal kann somit einem Drehwinkel entsprechen, der innerhalb der Zeitspanne tatsächlich besteht oder durch die Abweichung des Drehratensignals vorgetäuscht wird. Sofern die Linearbeschleunigung kleiner als der erste Schwellwert ist, kann davon ausgegangen werden, dass keine Drehung vorliegt und das Drehratensummensignal somit aus der Abweichung des Drehratensignals resultiert. Die Zeitspanne kann fest vorgegeben sein. Die Abweichung kann als erkannt gelten, wenn das Drehratensummensignal innerhalb der Zeitspanne oder am Ende der Zeitspanne den zweiten Schwellwert erreicht oder passiert.

Gemäß einer Ausführungsform kann die Abweichung des Drehratensignals erkannt werden, wenn das Drehratensummensignal innerhalb der Zeitspanne den zweiten Schwellwert überschreitet. Die Zeitspanne kann kleiner als 200ms sein. Beispielsweise kann die Zeitspanne zwischen 20ms und 40ms dauern. Nach Ablauf einer ersten Zeitspanne kann das Drehratensignal erneut analysiert werden. Dazu kann das Drehratensummensignal zurückgesetzt und mit einem erneuten Aufsummieren des Drehratensignals begonnen werden.

Der erste Schwellwert kann kleiner oder gleich einem Grenzwert eines zulässigen Rauschanteils der Information über die Linearbeschleunigung sein. Auf diese Weise kann auf einfache Weise bestimmt werden, ob eine tatsächliche Linearbeschleunigung vorliegt, die ein Erkennen der Abweichung des Drehratensignals verhindern würde.

Entsprechend dazu kann der zweite Schwellwert einem Wert entsprechen, der sich durch ein Aufsummieren einer zulässigen Abweichung des Drehratensignals über die Zeitspanne ergibt. Somit kann der zweite Schwellwert einem über die Zeitspanne aufsummierten Wert der zulässigen Abweichung des Drehratensignals entsprechen. Auch kann der zweite Schwellwert einem Wert entsprechen, der geringfügig größer als der Wert ist, der sich durch ein Aufsummieren der zulässigen Abweichung des Drehratensignals über die Zeitspanne ergibt. Die zulässige Abweichung kann einem bekannten spezifizierten Fehler des Drehratensignals entsprechen. Führt das Aufsummieren des Drehratensignals zu einem Erreichen oder Überschreiten des zweiten Schwellwertes, obwohl über die Linearbeschleunigung festgestellt wird, das keine tatsächliche Drehrate vorliegt, so bedeutet dies, dass die Abweichung des Drehratensignals größer als die zulässige Abweichung ist.

Gemäß einer Ausführungsform kann das erfindungsgemäße Verfahren einen Schritt des Bereitstellens eines Wertes des Drehratensummensignals zum Ende der Zeitspanne umfassen. Das Drehratensummensignal kann vor einem Rücksetzten des Drehratensummensignals für eine erneute Analyse der Drehrate an eine Auswerteeinrichtung oder an eine Speichereinrichtung bereitgestellt werden. Das Drehratensummensignal gibt einen Hinweis auf eine aktuell vorliegende Abweichung des Drehratensignals und kann bei einer Weiterverarbeitung des Drehratensignals berücksichtigt werden. Beispielsweise kann aus dem Drehratensummensignal ein Korrekturwert zur Korrektur eines zur Weiterverarbeitung vorgesehenen Drehratensignals eingesetzt werden.

Die Linearbeschleunigung kann eine Querbeschleunigung oder Längsbeschleunigung des Fahrzeugs und die Drehrate eine Drehgeschwindigkeit des Fahrzeugs um eine Fahrzeughochachse, Fahrzeuglängsachse oder Fahrzeugquerachse repräsentieren. Somit kann das erfindungsgemäße Verfahren vorteilhaft zur Absicherung der Gierrate und/oder der Rollrate und/oder der Pitchrate eingesetzt werden.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden. Bei der Vorrichtung kann es sich um einen Sensor, eine Auswertevorrichtung oder um ein Steuergerät handeln.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:

Fig. 1    ein schematische Darstellung eines Fahrzeugs;

Fig. 2    ein Ablaufdiagramm eines erfindungsgemäßen Verfahrens;

Fig. 3    eine Darstellung eines Beschleunigungssignals;

Fig. 4    eine Darstellung eines Drehratensignals;

Fig. 5    eine Darstellung einer Analyse des Drehratensignals;

Fig. 6    ein Ablaufdiagramm eines Ausführungsbeispiels der vorliegenden Erfindung; und

Fig. 7    ein Ablaufdiagramm eines weiteren Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

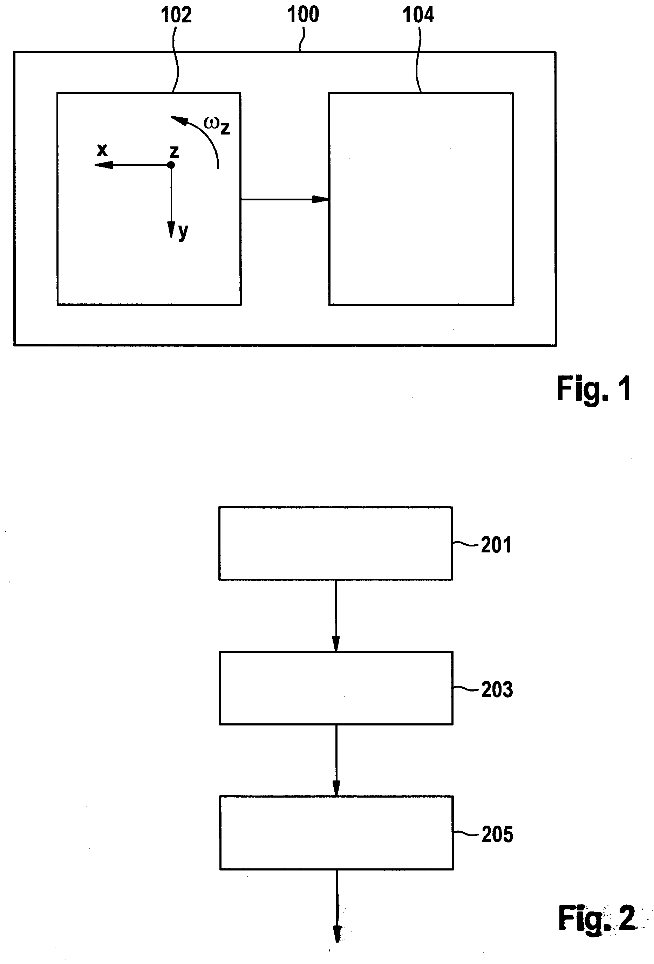

Fig. 1 zeigt eine schematische Darstellung eines Fahrzeugs, in dem das erfindungsgemäße Verfahren zur Erkennung einer Abweichung eines Drehratensignals eines Sensors gemäß einem Ausführungsbeispiel der vorliegenden Erfindung umgesetzt werden kann.

Gezeigt ist ein Fahrzeug 100, in dem ein Inertialsensor 102 angeordnet ist. Der Inertialsensor 102 ist ausgebildet, um Linearbeschleunigungen des Fahrzeugs in der Fahrzeuglängsachse x und der Fahrzeugquerachse y und eine Drehrate $\omega_Z$ des Fahrzeugs um die Fahrzeughochachse z zu erfassen und entsprechende Informationen oder Signale an eine Auswerteeinrichtung 104 bereitzustellen. Die Auswerteeinrichtung 104 kann Teil des Inertialsensor 102 sein oder als separate Einrichtung ausgeführt sein, die über eine entsprechende Schnittstelle mit dem Inertialsensor 102 verbunden ist.

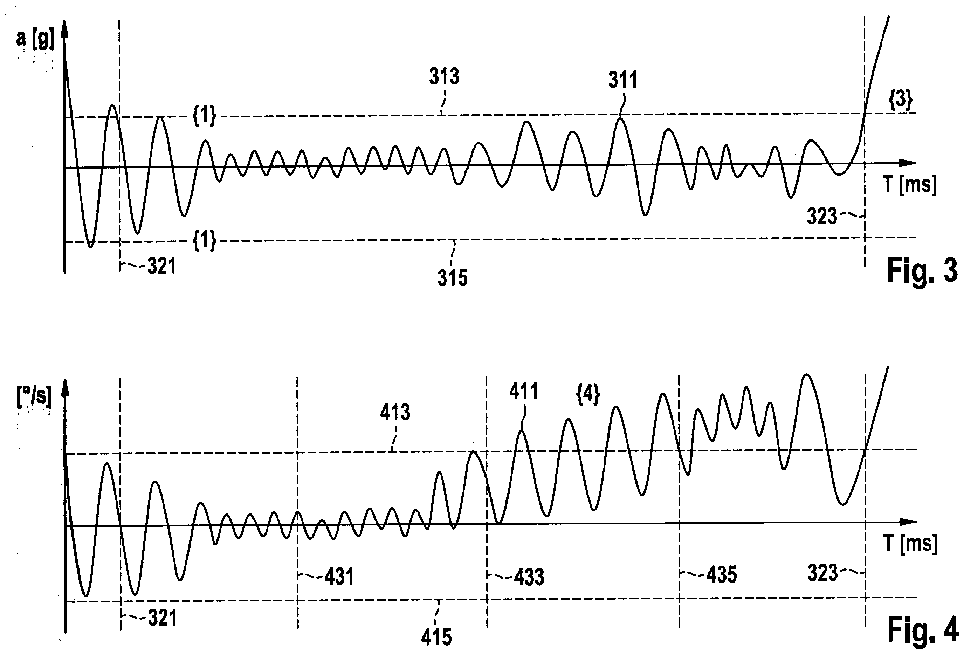

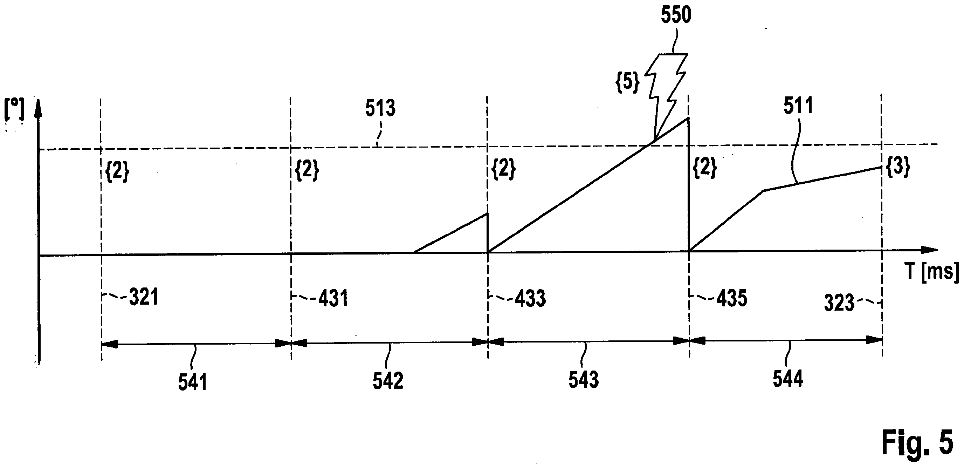

Fig. 2 zeigt ein Ablaufdiagramm eines Verfahrens zur Erkennung einer Abweichung eines Drehratensignals eines Sensors, gemäß einem Ausführungsbeispiel der vorliegenden Erfindung. In einem Schritt 201 wird eine Information über eine Linearbeschleunigung empfangen. Bei der Information über die Beschleunigung kann es sich um eine Querbeschleunigung entlang der Fahrzeugquerachse handeln. Die Information über die Beschleunigung kann ein Beschleunigungssignal darstellen, wie es in Fig. 3 gezeigt ist. In einem Schritt 203 wird das Drehratensignal empfangen. Bei dem Drehratensignal kann es sich um die Drehrate des Fahrzeugs um die Fahrzeughochachse handeln. Das Drehratensignal kann einen Verlauf aufweisen, wie er in Fig. 4 gezeigt ist. Die Schritte 201, 203 können auch in umgekehrter Reihenfolge oder gleichzeitig durchgeführt werden. Insbesondere können die Information über die Linearbeschleunigung und das Drehratensignal auch fortlaufend empfangen werden. In einem Schritt 205 erfolgt ein Analysieren des Drehratensignals. Das Analysieren kann parallel zu den Schritten 201, 203 durchgeführt werden, wenn die Linearbeschleunigung kleiner als ein Schwellwert ist. Über das Analysieren kann die Abweichung des Drehratensignals erkannt werden. Das Analysieren kann entsprechend der anhand von Fig. 5 beschriebenen Vorgehensweise durchgeführt werden.

Anhand der Figuren 3 bis 5 wird das erfindungsgemäße Verfahren gemäß einem Ausführungsbeispiel, das auf einem Prinzip der kontinuierlichen Bestimmung des absoluten Drehratenoffsets in Ruhelage basiert, beschrieben.

Fig. 3 zeigt einen zeitlichen Verlauf einer Linearbeschleunigung 311 in einem Koordinatensystem, bei dem auf der Abszisse die Zeit T in Millisekunden und auf der Ordinate die Beschleunigung a[g] aufgetragen ist. Bei der Linearbeschleunigung kann es sich um eine y-Beschleunigung, also beispielsweise um eine Querbeschleunigung eines Fahrzeugs handeln. Auch wenn real keine Linearbeschleunigung vorliegt, kann der Verlauf der Linearbeschleunigung 311 aufgrund von Rauschen einen Ausschlag aufweisen. In Fig. 3 ist bezüglich der Linearbeschleunigung eine obere Rauschschwelle 313 und einen untere Rauschschwelle 315 gezeigt. Die obere Rauschschwelle 313 und die untere Rauschschwelle 315 weisen unterschiedliche Vorzeichen auf und können betragsmäßig gleich groß sein. Die Rauschschwellen 313, 315 definieren Beschleunigungswerte, die einen Bereich eingrenzen, dem eine zu vernachlässigende reale Querbeschleunigung entspricht.

In einem Zeitbereich bis zu einem Startzeitpunkt 321 weist der Verlauf der Linearbeschleunigung 311 starke Schwingungen mit einer Amplitude auf, die die Rauschschwellen 313, 315 überschreitet. Ab dem Startzeitpunkt 321 und bis zu einem Stoppzeitpunkt 323 weist der Verlauf der Linearbeschleunigung 311 Schwingungen auf, die innerhalb des durch die Rauschschwellen 313, 315 begrenzten Bereichs verlaufen. Die Schwingungen zwischen den Zeitpunkten 321, 323 können durch Rauschen hervorgerufen sein. Das heißt es wird der Verlauf der Linearbeschleunigung 311 zeigt eine Linearbeschleunigung an, obwohl real keine Linearbeschleunigung vorliegt. Zum Stoppzeitpunkt 323 überschreitet der Verlauf der Linearbeschleunigung 311 die obere Rauschschwelle 313. Dies kann dadurch verursacht sein, das eine tatsächliche Linearbeschleunigung vorliegt.

Fig. 4 zeigt einen zeitlichen Verlauf einer Drehrate 411 in einem Koordinatensystem, bei dem auf der Abszisse die Zeit T in Millisekunden und auf der Ordinate die Drehrate [°/s] aufgetragen ist. Bei der Drehrate kann es sich um eine Drehgeschwindigkeit eines Fahrzeugs handeln. Auch wenn real keine Drehrate vorliegt, kann der Verlauf der Drehrate 411 aufgrund von Rauschen einen Ausschlag aufweisen. In Fig. 4 ist bezüglich der Drehrate eine obere Offset- und Rauschschwelle 413 und eine untere Offset- und Rauschschwelle 415 gezeigt. Erlaubt ist ein Rauschen zuzüglich eines zugelassenen Rohoffsets des Drehratensensors. Die obere Offset- und Rauschschwelle 413 und die untere Offset - und Rauschschwelle 415 weisen unterschiedliche Vorzeichen auf und können betragsmäßig gleich groß sein.

Zwischen dem Startzeitpunkt 321 und dem Stoppzeitpunkt 323, die den entsprechenden Zeitpunkten aus Fig. 3 entsprechen, sind drei weitere Zeitpunkte 431, 433, 435 aufgetragen. In einem Zeitbereich vor dem Startzeitpunkt 321 sowie bis zu dem Zeitpunkt 433 weist der Verlauf der Drehrate 411 Schwingungen auf, die innerhalb des durch die Offset- und Rauschschwellen 413, 415 begrenzten Bereichs verlaufen. Ab dem Zeitpunkt 433 weist der Verlauf der Drehrate 411 Schwingungen mit einer Amplitude auf, die die obere Offset- und Rauschschwellen 413 überschreitet.

Fig. 5 zeigt einen zeitlichen Verlauf einer Fensterintegraldrehrate in Form eines Drehwinkels 511 in einem Koordinatensystem, bei dem auf der Abszisse die Zeit T in Millisekunden und auf der Ordinate der Drehwinkel [°] aufgetragen ist. Der Drehwinkel wird durch Integration des in Fig. 4 gezeigten Verlaufs der Drehrate über die Zeit ermittelt, wobei der Drehwinkel 511 regelmäßig zurückgesetzt wird. Anstelle der Integration kann auch ein Aufsummieren diskreter Werte der Drehrate durchgeführt werden. Auch wenn real keine Drehrate vorliegt, kann der Verlauf der Drehrate aufgrund von Rauschen einen Ausschlag aufweisen. Somit kann der Verlauf des Drehwinkels 511 auch dann Drehwinkelwerte anzeigen, wenn real keine Drehrate vorliegt. In Fig. 5 ist bezüglich des Drehwinkels eine obere Offsetschwelle 513 gezeigt.

Aus Fig. 5 ist ersichtlich, dass die den in Fig. 4 entsprechenden Zeitpunkten 431, 433, 435 zwischen dem Startzeitpunkt 321 und dem Stoppzeitpunkt 323 so gewählt sind, das zwischen benachbarten Zeitpunkten 321, 431, 433, 435, 323 Zeitfenster 541, 542, 543, 544 für die Integration der Drehrate gebildet werden. Die Zeitfenster 541, 542, 543, 544 können jeweils die gleiche Dauer aufweisen.

Vor dem Startzeitpunkt 321 findet keine Analyse der Drehrate statt. Die Analyse beginnt mit dem Startzeitpunkt 321. Dementsprechend beginnt mit dem Startzeitpunkt 321 die Integration der Drehrate. Innerhalb des ersten Zeitfensters 541 weist die Drehrate einen um den Nullpunkt symmetrischen Schwingungsverlauf auf. Dementsprechend weist der Verlauf des Drehwinkels 511 innerhalb des ersten Zeitfensters 541 keinen Anstieg auf. Am Ende des ersten Zeitfensters 541, zum Zeitpunkt 431 wird der Wert des Drehwinkels 511 wieder zurückgesetzt. Innerhalb der zweiten Hälfte des zweiten Zeitfensters 542 weist die Drehrate einen vom Nullpunkt verschobenen Schwingungsverlauf auf. Dementsprechend weist der Verlauf des Drehwinkels 511 innerhalb des zweiten Zeitfensters 542 einen Anstieg auf. Nachdem die Drehrate im zweiten Zeitfenster 542 innerhalb der Offset - und Rauschschwellen verläuft, übersteigt der Verlauf des Drehwinkels 511 innerhalb des zweiten Zeitfensters 542 nicht die Offsetschwelle 513. Am Ende des zweiten Zeitfensters 542, zum Zeitpunkt 433 wird der Wert des Drehwinkels 511 wieder zurückgesetzt.

Innerhalb des dritten Zeitfensters 543 weist die Drehrate einen vom Nullpunkt verschobenen Schwingungsverlauf auf. Dementsprechend weist der Verlauf des Drehwinkels 511 innerhalb des dritten Zeitfensters 543 einen Anstieg auf. Nachdem die Drehrate im dritten Zeitfenster 543 zumindest zeitweise die obere Offset- und Rauschschwelle überschreitet, übersteigt der Verlauf des Drehwinkels 511 innerhalb des dritten Zeitfensters 543 die Offsetschwelle 513. Dies führt zu einer Offset-Fehler-Erkennung 550. Somit wurde eine über der vorgegebenen Toleranz liegende Abweichung des Drehratensignals erkannt. Am Ende des dritten Zeitfensters 543, zum Zeitpunkt 435 wird der Wert des Drehwinkels 511 wieder zurückgesetzt.

Innerhalb des vierten Zeitfensters 544 weist die Drehrate weiterhin einen vom Nullpunkt verschobenen Schwingungsverlauf auf. Dementsprechend weist der Verlauf des Drehwinkels 511 innerhalb des vierten Zeitfensters 544 einen Anstieg auf. Die Integration endet mit dem Stoppzeitpunkt 323, der dadurch gekennzeichnet ist, dass die in Fig. 3 gezeigte Beschleunigung die obere Rauschschwelle überschreitet.

Im Folgenden wird das erfindungsgemäße Verfahren anhand der Figuren 3 bis 5 nochmals am Ausführungsbeispiel eines Fahrzeugs beschrieben.

Bei jeder Kurvenfahrt tritt eine Seitenbeschleunigungskraft, die Zentrifugalkraft $F_Z$, am Fahrzeug auf. Die Zentrifugalkraft setzt sich aus der Masse des Fahrzeuges, der Geschwindigkeit und dem Radius der Kurve zusammen. Solange diese Kraft $F_Z$ kleiner als die Haftreibungskraft $F_R$ des Fahrzeuges ist, wird sich das Fahrzeug sicher durch die Kurve bewegen. Die Haftreibungskraft ergibt sich aus der Gewichtskraft des Fahrzeugs und der Haftreibungszahl $\mu$, die von den beiden Reibpartnern Rad-Straße abhängt.

Geht man von dem ungünstigsten Fall einer vollständig vereisten Fahrbahn aus, so beträgt $\mu$ ca. 0,1. Über das Kräftegleichgewicht lässt sich somit auf die zu erwartende Seitenbeschleunigung ohne Verlassen der gewünschten Spur (Normalfahrt) schließen. Diese Seitenbeschleunigung ay liegt im Bereich von 0,981 m/s$^2$.

Basierend auf einem Inertialsensor zur gleichzeitigen Messung von Gierrate $\omega_Z$. die eine Drehung um die Fahrzeughochachse beschreibt, sowie der Beschleunigungen ax und ay der Fahrzeuglängsachse und der Fahrzeugquerachse kann der absolute Drehratenoffsetfehler der Gierrate ermittelt werden. Dazu wird kontinuierlich das Beschleunigungssignal ay 311 der Fahrzeugquerachse auf dessen Größe überwacht, wie es in Fig. 3 gezeigt ist. Dies ist notwendig, da Beschleunigungen der Fahrzeugquerachse die wesentliche Größe für das mögliche Auftreten von Drehungen um die Fahrzeughochachse darstellen oder aber nur eine Kurvenfahrt anzeigen, die auch zu kleinen Drehraten um die Hochachse führen.

Solange sich das Beschleunigungssignal ay der Fahrzeugquerachse in einen definierten Bereich befindet, der dem Ruhewert des Signals ohne externe Seitenbeschleunigung einschließlich des erlaubten Rauschens entspricht, wie es in Fig. 3 durch {1} gekennzeichnet ist, kann das Drehratensignal 411 des Gierratensensors, das in Fig. 4 gezeigt ist, auf Offsetfehler überwacht werden. Dabei wird für die Dauer keiner erhöhten Seitenbeschleunigung ay über dem Rauschen jedes Datenwort des Gierratensensors über einen festen Zeitabschnitt t_Integral zum Drehwinkel integriert, wie es in Fig. 5 durch {2} gekennzeichnet ist.

Dieses Zeitfenster t_Integral 541, 542, 543, 544, gezeigt in Fig. 5, wird auf 20ms festgelegt, könnte aber auch beliebig verlängert werden. Die minimale Anforderung von 20ms ergibt sich aus der gewünschten Fehlererkennungszeit, die einer Anforderung von den Kunden entsprechen kann. Innerhalb dieser Zeit wird jedes neue bereitgestellte Drehratendatum integriert. Durch die Integration werden das Rauschen und andere zufällig auftretende Signale des Drehratensensors eliminiert. Somit ergibt sich der Drehwinkel aus der Addition der Drehrate pro Signaldatum über die Zeit t_Integral, hier 20ms.

$$Drehwinkel = \int_{t=0ms}^{t=20ms} \omega_z\, dt$$

Bedingung: ay $\leq$ max. zulässiges Rauschen ay Sensor

Beispielsweise bedeutet eine Querbeschleunigung ay, die kleiner gleich einem spezifizierten Rauschen der Querbeschleunigung ay einschließlich einer eventuellen Sicherheitsreserve ist, Ruhe. Es treten also keine externen Einflüsse auf. Dies ist vergleichbar mit einer Geradeausfahrt. Jedes Signaldatum $\omega_z$ mit maximal 3°/s, die pro 1 ms Abtastzeit zugelassen sind wird auf 20ms integriert. Daraus ergibt sich ein Drehwinkel von 0,06°.

Solange das Fahrzeug ohne messbare Seitenbeschleunigung ay betrieben wird, beispielsweise während eines Ampelstopps oder einer Geradeausfahrt, wird die gemessene Seitenbeschleunigung ay nur dem bekannten Rauschen und der erlaubten Offsetdrift des Querbeschleunigungssensors entsprechen. In heutigen Inertialsensoren wird dieser Wert im Bereich von ca. 0,1 m/s$^2$ liegen. Diese Ansprechschwelle, gezeigt in Fig. 3, kann allerdings frei gewählt werden, um systemspezifische Anpassungen an die Zielapplikation zu berücksichtigen. In aller Regel wird sich die Schwelle aber aus dem bekannten Rauschen des Seitenbeschleunigungssenors einschließlich Offset ableiten und berücksichtigt dabei auch dessen Maximalwerte, sogenannte Peak-to-Peak Werte.

Die Ansprechschwelle ist für den Beginn der Offsetdriftmessung, also der Integration der Drehrate des Gierratensensors, verantwortlich. Gleichzeitig bedeutet aber der Anstieg der Querbeschleunigung über diese Ansprechschwelle hinaus den Abbruch der Offsetdriftmessung, da jetzt davon ausgegangen werden muss, dass externe physikalische Kräfte eine reale Drehrate im Drehratensensor erzeugen können, wie es in den Figuren 3 und 5 durch {3} dargestellt ist.

Berücksichtigt man die zugelassene Drift des Drehratensignals von maximal $\pm$3°/s ergibt sich aus obigen Beispiel ein zulässiger Drehwinkel von $\pm$0,06° über 20ms Integration. Solange also der Drehwinkel unterhalb 0,06° absolut bleibt, abhängig von der Länge, also Zeitdauer, der Integration und dem erlaubten Offset des Sensors, liegt keine unzulässige Offsetdrift vor. Driften über $\pm$3°/s, wie in Fig. 4 durch {4} dargestellt, werden aber über die Integration erkannt und führen zu einem größeren Drehwinkel als 0,06° absolut. Diese Überschreitung wird als Bedingung genutzt, um die unzulässige Abweichung des Drehratenoffset dem System anzuzeigen, wie es in Fig. 5 durch {5} dargestellt ist.

Dazu ist es denkbar, die Information an ein Überwachungssignal zu koppeln, das ständig bei der Übertragung der aktuellen Sensorsignale an das Auswertesystem, z.B. an einen Mikrocontroller, integriert ist.

Somit ist ein Anzeigen des "Status" vom Sensor während der kontinuierlichen Übertragung an das Auswertesystem möglich. Beispielsweise kann ein digitaler Beschleunigungssensor seine SPI-Schnittstelle nutzen, um neben dem Messwert weitere Informationen digital anzuzeigen.

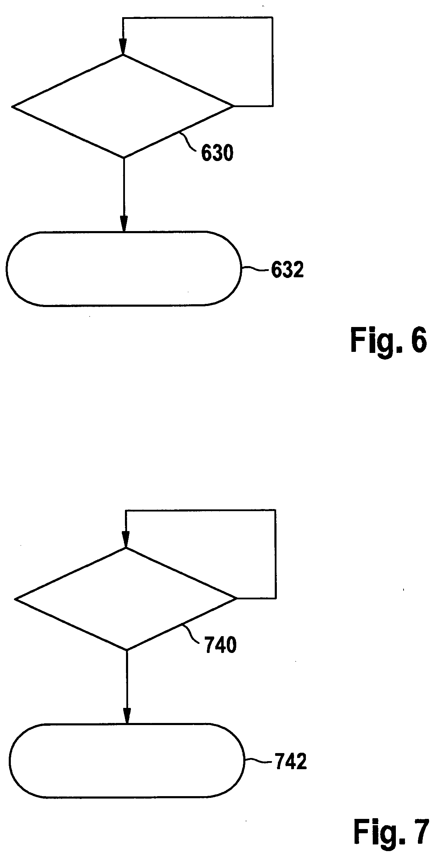

Fig. 6 zeigt ein Ablaufdiagramm eines Ausführungsbeispiels der vorliegenden Erfindung. Dieses Ausführungsbeispiel basiert auf einem Prinzip des Abspeicherns des integrierten Drehwinkels in Phasen der Ruhe, bei denen also keine Seitenbeschleunigung auftritt.

In einem Schritt 630 wird geprüft, ob der Drehwinkel über das Zeitfenster, hier über 20ms, fertig integriert ist. Bezogen auf Fig. 5 ist der Drehwinkel 411 beispielsweise zu den Zeitpunkten 431, 433, 435, 323 fertig integriert. Wird im Schritt 630 festgestellt, dass der Drehwinkel nicht fertig integriert ist, so wird der Schritt 630 wiederholt. Wird im Schritt 630 dagegen festgestellt, dass der Drehwinkel fertig integriert ist, so erfolgt in einem Schritt 632 ein Abspeichern des Drehwinkels, beispielsweise in einer Variablen x. Es wird also der bei der zuletzt durchgeführten Integration ermittelte Drehwinkel abgespeichert. Zudem wird eine neue Integration gestartet. Während des Verlaufs der neuen Integration wird erneut im Schritt 630 fortlaufend überprüft, ob der neue Drehwinkel fertig integriert ist.

Die Schritte 630, 632 können wiederum durchgeführt werden, solange ay < ay_erlaubt gilt. Dabei bezeichnet ay die vom Sensor angegebene Beschleunigung in Querrichtung und ay_erlaubt die Ansprechschwelle, wie sie in Fig. 3 gezeigt sind.

Fig. 7 zeigt ein Ablaufdiagramm eines Ausführungsbeispiels der vorliegenden Erfindung. Dieses Ausführungsbeispiel basiert auf einem Prinzip des Bereitstellens einer Information bei einem Überschreiten der Schwelle für den zugelassenen Drehwinkel.

In einem Schritt 740 wird geprüft, ob der Drehwinkel x über dem erlaubten Drehwinkel liegt. Bei dem Drehwinkel x kann es sich um den Drehwinkel handeln, der in dem in Fig. 6 gezeigten Ausführungsbeispiel im Schritt 632 abgespeichert wird. Dies ermöglicht es, den Drehwinkel mit einem Schwellwert zu vergleichen, nachdem das Zeitfenster der Integration abgelaufen ist. Alternativ, kann es bei dem Drehwinkel auch um den in Fig. 5 gezeigten Drehwinkel 411 handeln, der fortlaufend während der Durchführung der Integration mit dem Schwellwert verglichen werden kann. Wird im Schritt 740 festgestellt, dass der Drehwinkel nicht über dem erlaubten Drehwinkel liegt, so wird der Schritt 740 wiederholt. Wird im Schritt 740 dagegen festgestellt, dass der Drehwinkel über dem erlaubten Drehwinkel liegt, so erfolgt in einem Schritt 742 eine Information über ein Setzen einer Statusmeldung. Die Statusmeldung kann anzeigen, dass der Drehwinkel den erlaubten Drehwinkel überschreitet, und somit eine Abweichung des Drehratensignals vorliegt, die über der tolerierten oder bekannten Abweichung liegt.

Der Schritt 740 kann fortlaufend wiederholt werden, so dass eine ständige Überwachung der Variable x durchgeführt wird.

Wie anhand der Figuren 6 und 7 beschrieben, kann die anhand der Figuren 3 bis 5 beschriebene Messung des Drehratenoffsets kontinuierlich vom Sensor oder aber auch von der nachfolgenden Auswerteeinheit erfolgen, solange nur die Querbeschleunigung des Fahrzeugs, gemessen über den integrierten hochauflösenden Seitenbeschleunigungssensor unterhalb der Auslöseschwelle von z.B. $\pm 0{,}1 m/s^2$ liegt. Sobald das erste Ergebnis der Integration vorliegt, wird der berechnete Drehwinkel gespeichert. Die nachfolgenden Ergebnisse aus den kontinuierlichen Messungen, hier alle 20ms, werden durch Überschreiben des zuvor errechneten Drehwinkels ebenfalls kontinuierlich gespeichert. Somit ist es möglich, zu jeder Zeit den aktuellen Drehwinkel aus dem Sensor auszulesen oder aber ihn erst nach Anzeigen der Überschreitung, also ereignisgesteuert, auszulesen, wie es in Fig. 7 gezeigt ist.

Die Auswerteeinheit kann den übertragenen Drehwinkel durch Kenntnis der Integrationszeit t_Integral zu jeder Zeit wieder in den absoluten Drehratenoffset in Ruhe zurückrechnen. Dies erfolgt durch einfache Differenzierung des Drehwinkels über die Zeit t_Integral.

Durch das Messprinzip lässt sich die erfindungsgemäße Überwachung auch auf einen Rollratensensor anwenden. Diese Inertialsensoren besitzen ebenfalls ein hochempfindliches laterales ay und vertikales az Beschleunigungselement. Bei Fahrzeugdrehungen um die Längsachse, ein Rollen entspricht dabei einem Überschlag, treten immer auch Vertikal- und Lateralbeschleunigungen auf. Die Überwachung beider Beschleunigungen auf Überschreitungen des erlaubten Rauschens können zum Abbruch der Offsetdriftmessung des Rollratensignals benutzt werden.

Prinzipiell ist das erfindungsgemäße Verfahren somit an allen Inertialsensoren, also Sensoren die mindestens einen Drehratenkanal und einen Beschleunigungskanal in Wirkrichtung zur Drehachse in einem Gehäuse haben, z.B. ein $\omega_Z$-Drehratenelement und ein ay-Beschleunigungselement, anwendbar. Der interne Beschleunigungskanal muss empfindlich genug sein, Beschleunigungen die zu Drehraten im Drehratensensor führen über seinem eigenen Rauschen zu erkennen. Typischerweise sind das alle ESP-Zentralbeschleunigungssensoren, als "low g x,y" bezeichnet. Der Messbereich liegt meist im Bereich bis zu $\pm 50 m/s^2$, wobei die Auflösung mindestens $0{,}002 m/s^2$ beträgt. Es können auch externe Beschleunigungssensoren verwendet werden. Das heißt, Intertialsensoren sind nicht zwingend notwendig für die erfindungsgemäße Anwendung.

Die Signalverarbeitung und Offsetermittlung muss sich nicht zwangsläufig im gleichen Sensorgehäuse befinden, also beispielsweise auf einem ASIC, und könnte auch von einer externen Recheneinheit übernommen werden. Typisch dafür sind auch analoge Sensoren bei dem das Messsignal analog an einen externen Mikrocontroller übertragen wird und dort die Weiterverarbeitung erfolgt.

Der erfindungsgemäße Ansatz kann bei Inertialsensoren eingesetzt werden. Solche Sensoren können einen integrierten Mikrocontroller aufweisen, der für die Überwachung der Sensorsignale eingesetzt werden kann. Der Vorteil eines solchen des Mikrocontroller liegt in einer flexiblen Programmierung wobei direkt auf die Messdaten des Sensors im Sensor selbst zurückgegriffen werden kann. Die Implementierung der erfindungsgemäßen Offsetdriftüberwachung kann somit über eine Softwareprogrammierung erfolgen und muss nicht im ASIC-Design berücksichtigt werden, wodurch sich auch eine Kostensenkung ergibt. Außerdem kann flexibel während der Entwicklung der einzelnen Musterphasen die Parametrisierung vorgenommen werden.

Die beschriebenen und in den Figuren gezeigten Ausführungsbeispiele sind nur beispielhaft gewählt.

**Patentansprüche**

1. Verfahren zur Erkennung einer Abweichung eines Drehratensignals eines Sensors (102) eines Fahrzeugs (100), das die folgenden Schritte umfasst:

   Empfangen (201) einer Information über eine Linearbeschleunigung (311) des Fahrzeugs über eine erste Schnittstelle;
   Empfangen (203) des Drehratensignals (311) über eine zweite Schnittstelle, wobei das Drehratensignal eine Drehrate des Fahrzeugs repräsentiert; und
   Analysieren (205) des Drehratensignals, wenn die Linearbeschleunigung kleiner als ein erster Schwellwert (313, 315) ist, um die Abweichung des Drehratensignals zu erkennen.

2. Verfahren gemäß Anspruch 1, mit einem Schritt des Vergleichens der Information über die Linearbeschleunigung (311) mit dem ersten Schwellwert (313, 315), um zu bestimmen, ob die Linearbeschleunigung kleiner als der erste Schwellwert ist.

3. Verfahren gemäß einem der vorangegangenen Ansprüche, bei dem der Schritt des Analysierens (205) ein Aufsummieren des Drehratensignals (411) über eine Zeitspanne (541, 542, 543, 544) umfasst, um ein Drehratensummensignal (511) zu erhalten und bei dem die Abweichung des Drehratensignals durch ein Vergleichen des Drehratensummensignals mit einem zweiten Schwellwert (513) erkannt wird.

4. Verfahren gemäß Anspruch 4, bei dem die Abweichung des Drehratensignals erkannt wird, wenn das Drehratensummensignal (511) innerhalb der Zeitspanne (541, 542, 543, 544) den zweiten Schwellwert (513) überschreitet.

5. Verfahren gemäß einem der Ansprüche 3 bis 5, bei dem der erste Schwellwert (313, 315) kleiner oder gleich einem Grenzwert eines zulässigen Rauschanteils der Information über die Linearbeschleunigung (311) ist.

6. Verfahren gemäß einem der Ansprüche 4 bis 5, bei dem der zweite Schwellwert (513) einem Wert entspricht, der sich durch ein Aufsummieren einer zulässigen Abweichung des Drehratensignals über die Zeitspanne (541, 542, 543, 544) ergibt.

7. Verfahren gemäß einem der Ansprüche 4 bis 6, mit einem Schritt des Bereitstellens (632) eines Wertes des Drehratensummensignals (511) zum Ende der Zeitspanne (541, 542, 543, 544).

8. Verfahren gemäß einem der vorangegangenen Ansprüche, bei dem die Linearbeschleunigung (311) eine Querbeschleunigung des Fahrzeugs (100) und die Drehrate (411) eine Drehgeschwindigkeit des Fahrzeugs um eine Fahrzeughochachse oder Fahrzeuglängsachse repräsentiert.

9. Vorrichtung mit Einrichtungen zum Empfangen einer Information über eine Linearbeschleunigung eines Fahrzeugs und mit Einrichtungen zum Empfangen eines Drehratensignals und zum Analysieren des Drehratensignals, wobei die Vorrichtung dazu ausgebildet ist, die Schritte eines Verfahrens gemäß einem der Ansprüche 2 bis 8 durchzuführen.

10. Computerprogrammprodukt mit Programmcode, der auf einem maschinenlesbaren Träger gespeichert ist, zur Durchführung des Verfahrens nach einem der Ansprüche 2 bis 8, wenn das Programm auf einer Vorrichtung ausgeführt wird.

**Claims**

1. Method for detecting a deviation of a rotation rate signal of a sensor (102) of a vehicle (100), which comprises the following steps:

   receiving (201) information about a linear acceleration (311) of the vehicle via a first interface;
   receiving (203) the rotation rate signal (311) via a second interface, the rotation rate signal representing a rotation rate of the vehicle; and
   analysing (205) the rotation rate signal if the linear acceleration is less than a first threshold value (313, 315), in order to detect the deviation of the rotation rate signal.

2. Method according to Claim 1, comprising a step of comparing the information about the linear acceleration (311) with the first threshold value (313, 315) in order to determine whether the linear acceleration is less than the first threshold value.

3. Method according to one of the preceding claims, in which the analysis step (205) comprises summing the rotation rate signal (411) over time interval (541, 542, 543, 544) in order to obtain a rotation rate sum signal (511), and in which the deviation of the rotation rate signal is detected by comparing the rotation rate sum signal with a second threshold value (513).

4. Method according to Claim 4, in which the deviation of the rotation rate signal is detected if the rotation rate sum signal (511) exceeds the second threshold value (513) within the time interval (541, 542, 543, 544).

5. Method according to one of Claims 3 to 5, in which the first threshold value (313, 315) is less than or equal to a limiting value of a permissible noise component of the information about the linear acceleration (311).

6. Method according to either of Claims 4 and 5, in which the second threshold value (513) corresponds to a value which results from summing a permissible deviation of the rotation rate signal over the time interval (541, 542, 543, 544).

7. Method according to one of Claims 4 to 6, comprising a step of providing (632) a value of the rotation rate sum signal (511) at the end of the time interval (541, 542, 543, 544).

8. Method according to one of the preceding claims, in which the linear acceleration (311) represents a transverse acceleration of the vehicle (100), and the rotation rate (411) represents a speed of rotation of the vehicle about a vehicle vertical axis or vehicle longitudinal axis.

9. Device comprising means for receiving information about a linear acceleration of a vehicle and comprising means for receiving a rotation rate signal and for analysing the rotation rate signal, the device being designed to carry out the steps of a method according to one of Claims 2 to 8.

10. Computer program product comprising program code which is stored on a machine-readable carrier, for carrying out of the method according to one of Claims 2 to 8 when the program is executed on a device.

**Revendications**

1. Procédé de détection d'un écart d'un signal de vitesse de rotation d'un capteur (102) d'un véhicule (100), comprenant les étapes consistant à :

recevoir (201) une information concernant une accélération linéaire (311) du véhicule par l'intermédiaire d'une première interface ;
recevoir (203) le signal de vitesse de rotation (311) par l'intermédiaire d'une seconde interface, dans lequel le signal de vitesse de rotation représente une vitesse de rotation du véhicule ;
analyser (205) le signal de vitesse de rotation lorsque l'accélération linéaire est inférieure à une première valeur de seuil (313, 315) afin de détecter l'écart du signal de rotation.

2. Procédé selon la revendication 1, comportant une étape consistant à comparer l'information concernant l'accélération linéaire (311) à la première valeur de seuil (313, 315) afin de déterminer si l'accélération linéaire est inférieure à la première valeur de seuil.

3. Procédé selon l'une quelconque des revendications précédentes, dans lequel l'étape d'analyse (205) comprend une sommation du signal de vitesse de rotation (411) au cours d'un intervalle de temps (541, 542, 543, 544) afin d'obtenir un signal de somme de vitesse de rotation (511) et dans lequel l'écart du signal de vitesse de rotation est détecté au moyen d'une comparaison du signal de somme de vitesse de rotation à une seconde valeur de seuil (513).

4. Procédé selon la revendication 4, dans lequel l'écart du signal de vitesse de rotation est détecté lorsque le signal de somme de vitesse de rotation (511) dépasse la seconde valeur de seuil (513) au cours de l'intervalle de temps (541, 542, 543, 544).

5. Procédé selon l'une quelconque des revendications 3 à 5, dans lequel la première valeur de seuil (313, 315) est inférieure ou égale à une valeur limite d'une composante de bruit admissible de l'information concernant l'accélération linéaire (311).

6. Procédé selon l'une quelconque des revendications 4 à 5, dans lequel la seconde valeur de seuil (513) correspond à une valeur qui résulte d'une sommation d'un écart admissible du signal de vitesse de rotation au cours de l'intervalle de temps (541, 542, 543, 544).

7. Procédé selon l'une quelconque des revendications 4 à 6, comportant une étape consistant à fournir (632) une valeur du signal de somme de rotation (511) à la fin de l'intervalle de temps (541, 542, 543, 544).

8. Procédé selon l'une quelconque des revendications précédentes, dans lequel l'accélération linéaire (311) représente une accélération transversale du véhicule (100) et dans lequel la vitesse de rotation (411) représente une vitesse de rotation du véhicule autour d'un axe vertical du véhicule ou d'un axe longitudinal du véhicule.

9. Dispositif comportant des moyens permettant de recevoir une information concernant une accélération linéaire d'un véhicule et comportant des moyens permettant de recevoir un signal de vitesse de rotation et d'analyser le signal de vitesse de rotation, dans lequel le dispositif est conçu pour mettre en oeuvre les étapes d'un procédé selon l'une quelconque des revendications 2 à 8.

10. Produit de programme d'ordinateur comportant un code de programme qui est stocké sur un support lisible par ordinateur, pour mettre en oeuvre le procédé selon l'une quelconque des revendications 2 à 8 lorsque le programme est exécuté sur un dispositif.

102     100     104

$\omega_z$

x

z

y

**Fig. 1**

201

203

205

**Fig. 2**

EP 2 544 935 B1

a [g]

313    311

{1}    {3}

{1}

321

315

**Fig. 3**

[°/s]

413    411    {4}

431    433    435    323

321

415

**Fig. 4**

Fig. 5

EP 2 544 935 B1

630

632

**Fig. 6**

740

742

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007004606 A1
- DE 10348165 A
- DE 102006049118 A1